# EUROPEAN PATENT SPECIFICATION

(11) **EP 3 656 717 B1**
(45) Date of publication and mention of the grant of the patent: **30.08.2023**
(21) Application number: 18834858.5
(22) Date of filing: 19.07.2018
(51) Int. Cl.: B66B 3/00, B66B 1/34, B66B 1/46

(54) **SMART GUIDANCE FOR CONTROLLING PASSENGER TO ENTER CORRECT ELEVATOR CAR**
INTELLIGENTE FÜHRUNG ZUR STEUERUNG EINES PASSAGIERS ZUM BETRETEN DER KORREKTEN AUFZUGSKABINE
GUIDAGE INTELLIGENT PERMETTANT DE COMMANDER À UN PASSAGER D'ENTRER DANS LA BONNE CABINE D'ASCENSEUR

(30) Priority: 19.07.2017 CN 201710589473
(43) Date of publication of application: 27.05.2020
(73) Proprietor: Otis Elevator Company, Farmington, Connecticut 06032 (US)
(72) Inventor: LARMUSEAU, Adriaan Joris H., Shanghai 201204 (CN); LI, Changle, Shanghai 201204 (CN)
(74) Representative: Dehns
(86) International application number: PCT/CN2018/096253
(87) International publication number: WO 2019/015642

(56) References cited:
- EP-A2- 3 116 200
- CN-A- 101 035 731
- CN-A- 103 183 262
- CN-A- 105 502 111
- CN-A- 106 586 733
- CN-U- 204 980 676
- US-A1- 2015 314 984

## Description

### Technical Field

The present invention pertains to the technical field of intelligent control of elevators, and relates to guiding passengers to move relative to elevator cabins by means of communication interaction between wireless signal broadcasting components installed in the elevator cabins and personal mobile terminals.

### Background of the Invention

As building structures are becoming more and more complicated, elevator systems installed therein for carrying passengers usually have multiple elevator cabins.

When a passenger performs an elevator call operation, the elevator system will schedule according to said elevator call operation, a common form of which is to designate a certain elevator cabin among a plurality of operating elevator cabins as the right elevator cabin for said passenger.

However, when a plurality of elevator cabins land at the floor station of the passenger at substantially the same time, the passenger might enter into the wrong elevator cabin.

EP 3116200 A2 discloses the features of the preamble of claim 1, and shows a wayfinder system including at least one beacon operable to transmit information that relates a position of the beacon with respect to a predefined destination. A method of directing a user to a passenger conveyance is disclosed which includes receiving information that relates a position of a beacon with respect to a predefined destination and displaying directions to the predefined destination from the information via a mobile device application.

### Summary of the Invention

According to a first aspect of the present invention, there is provided a system as defined by claim 1.

According to a second aspect of the present invention, an elevator system is provided, which comprises: a plurality of elevator cabins and an elevator controller, and further comprises the system for guiding a passenger to enter into the right elevator cabin as provided in the first aspect of the present invention.

According to a third aspect of the present invention, a method for guiding a passenger to enter into the right elevator cabin as defined by claim 12 is provided.

According to a fourth aspect of the present invention, a computer-readable storage medium is provided having computer program stored thereon, wherein said program is executed by a processor of the personal mobile terminal of the system of the first aspect to carry out the steps of the method as provided in the third aspect of the present invention.

The above features and operations of the present invention will become clearer on the basis of the descriptions below and the drawings.

### Brief Description of the Drawings

The above-mentioned and other objects and advantages of the present invention will become more complete and apparent from the following detailed descriptions with reference to the accompanying drawings, wherein the same or similar elements are denoted by the same reference numeral.
Fig. 1 is a structural diagram of a system for guiding a passenger to enter into the right elevator cabin according to one embodiment of the present invention;
Fig. 2 is a structural diagram of modules of a personal mobile terminal according to one embodiment of the present invention;
Fig. 3 is a flow chart of a method for guiding a passenger to enter into the right elevator cabin according to one embodiment of the present invention;
Fig. 4 is a flow chart of a method for guiding a passenger to enter into the right elevator cabin according to another embodiment of the present invention.

### Detailed Description of the Invention

The present invention will be described in further detail below with reference to the drawings. Exemplar embodiments are shown in the drawings, but the present invention may be implemented in many different forms and it shall not be limited to the embodiments described herein. The embodiments are only provided to make the disclosure thorough and complete and to convey the idea of the present invention fully to those skilled in the art.

Some block diagrams in the drawings are functional entities, which do not necessarily correspond to physically or logically independent entities. Said functional entities may be realized in the form of software, or be realized in one or more hardware modules or integrated circuits, or in different processing devices and/or micro-controller devices.

In this text, for easy description, the "system for guiding a passenger to enter into the right elevator cabin" is called the "guiding system" and the "method for guiding a passenger to enter into the right elevator cabin" is called the "guiding method".

In this text, the "right elevator cabin" or "correct elevator cabin" refers to the elevator cabin that can carry the passenger to the destination floor, specifically, it can be an elevator cabin designated for said passenger, for example. It shall be appreciated that the right elevator cabin does not specifically refer to a certain one elevator cabin or a plurality of elevator cabins, for example, in the case where the elevator call operation change, the right elevator cabin may very likely change correspondingly. The "movement for entering into the right elevator cabin" refers to the movement of a passenger continuously approaching the right elevator cabin from the elevator floor station area and stepping into the right elevator cabin, which includes both the moving process of approaching the right elevator cabin and the moving process of stepping into the right elevator cabin.

In this text, the first wireless signal is defined over the first wireless signal broadcasting component installed in the elevator cabin. Wireless signals broadcasted by different first wireless signal broadcasting components are all called as "first wireless signals". It shall be understood that a plurality of the first wireless signal broadcasting components in a plurality of elevator cabins can broadcast a plurality of first wireless signals; moreover, the plurality of first wireless signals can be identified distinguishably. The second wireless signal is defined over the second wireless signal broadcasting component installed in the elevator floor station area. Wireless signals broadcasted by different second wireless signal broadcasting components are all called as "second wireless signals". It shall be understood that the second wireless signal broadcasting components in different elevator floor station areas can broadcast different second wireless signals.

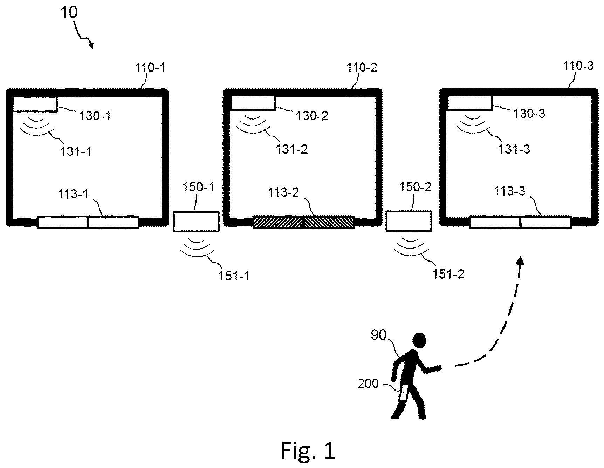

Fig. 1 is a structural diagram of a system for guiding a passenger to enter into the right elevator cabin according to one embodiment of the present invention. It shall be noted first that a guiding system 10 in the embodiment shown in Fig. 1 is installed in an elevator system according to an embodiment of the present invention, in which a plurality of elevator cabins 110 are used for carrying passengers, for example, three elevator cabins 110-1, 110-2 and 110-3 as shown in Fig. 1 are used for carrying passengers; it shall be understood that the number of the elevator cabins 110 is not limited to three, and a plurality of elevator cabins 110 may run up and down in different elevator shafts.

As shown in Fig. 1, the guiding system 10 mainly comprises first wireless signal broadcasting components 130 installed in the plurality of elevator cabins 110 and a personal mobile terminal 200 carried by a passenger 90. Wherein, each of the first wireless signal broadcasting components 130 is installed in each of the elevator cabins 110, for example, a first wireless signal broadcasting component 130-1 is provided in elevator cabin 110-1, a first wireless signal broadcasting component 130-2 is provided in elevator cabin 110-2, and a first wireless signal broadcasting component 130-3 is provided in elevator cabin 110-3. In one embodiment, in each elevator cabin 110, the first wireless signal broadcasting component 130 can be, but is not limited to be, installed on a destination floor registration control panel in the elevator cabin 110, and is integrated onto the destination floor registration control panel so as to establish communication connection with an elevator controller of the elevator system (not shown in the figure); and it shall be understood that the specific way of integrating a first Bluetooth module 130 into the destination floor registration control panel is non-limiting.

The first wireless signal broadcasting component 130 in each elevator cabin 110 can continuously broadcast a first wireless signal 131 through, for example, an antenna or beacon provided thereon, or can broadcast a first wireless signal when the door 113 of the cabin is open. As an example, the first wireless signal broadcasting component 130-1 broadcasts a first wireless signal 131-1, the first wireless signal broadcasting component 130-2 broadcasts a first wireless signal 131-2 and the first wireless signal broadcasting component 130-3 broadcasts a first wireless signal 131-3, and the broadcasted first wireless signals 131-1, 131-2 and 131-3 may be the same form of signals or may have substantially the same signal intensity but can be identified distinguishably. The intensity of the first wireless signal 131 substantially decreases or attenuates as the broadcasting distance increases, so a terminal receiving said first wireless signal 131 may roughly determine its distance from the first wireless signal broadcasting component 130 that broadcasts said first wireless signal 131 according to the intensity of the received first wireless signal 131, thereby roughly determining the change of the distance according to the change of the signal intensity. The way of decreasing of the intensity of the first wireless signal 131 is non-limiting, and it can be predetermined.

In one embodiment, the first wireless signal broadcasting component 130 can be a Bluetooth module, specifically a Bluetooth Low Energy (BLE) module, accordingly, the first wireless signal 131 transmitted or broadcasted by the first wireless signal broadcasting component 130 can be a Bluetooth low energy signal. In this case, it is easy to communicate and interact with personal mobile terminals 200 realized by such as smart mobile phones, wearable intelligent devices, personal digital assistants (PDA), and the energy consumption is low.

In another embodiment, the first wireless signal broadcasting component 130 can be a WiFi module, and the broadcasted first wireless signal 131 is a WiFi wireless signal.

When the elevator cabin 110 lands at a certain floor station, if the cabin door 113 of the elevator cabin 110 opens, the first wireless signal 131 can be broadcasted to the elevator floor station area corresponding to said floor station, and the broadcasting distance can be predetermined as desired.

The first wireless signal 131 is an identifiable wireless signal, for example, it includes an ID signal of the elevator cabin 110 in which the first wireless signal broadcasting component 131 is installed, and the personal mobile terminal 200 that receives said first wireless signal 131 can determine, according to said ID information, from which one of the plurality of elevator cabins 110 said first wireless signal 131 is broadcasted. For example, the first wireless signals 131-1, 131-2 and 131-3 broadcasted from three different elevator cabins 110-1, 110-2 and 110-3 include different ID information, so that the personal mobile terminal 200 can identify the currently received first wireless signal 131.

Still referring to Fig. 1, the guiding device 10 may comprise a plurality of personal mobile terminals 200 carried by each of the passengers 90. Fig. 1 shows the personal mobile terminal 200 carried by one of the passengers 90, which is placed in a pocket of the passenger 90, for example, but it shall be appreciated that the number of passengers 90 that carry the personal mobile terminals 200 is non-limiting, and the way in which the passengers 90 carry the personal mobile terminals 200 is non-limiting, either.

In one embodiment, the passenger can perform the elevator call operation manually or automatically through the personal mobile terminal 200, and the specific way of performing the elevator call operation automatically will be described in the example below. Meanwhile, the personal mobile terminal 200 will be able to receive and store a certain elevator cabin 110 designated for the passenger 90, i.e. the right elevator cabin.

The personal mobile terminal 200 of the passenger 90 who is in the elevator floor station area will be able to receive and identify the first wireless signal 131 broadcasted from the elevator cabin 110. In one embodiment, if multiple elevator cabins 110 land at the same floor station and the cabin doors 113 open, the personal mobile terminal 200 may be able to sense the first wireless signals 131 broadcasted from the multiple elevator cabins 110, and the personal mobile terminal 200 can be configured to choose to receive the first wireless signal 131 having a relatively stronger intensity, then it also means that the personal mobile terminal 200 is closest to the elevator cabin 110 that corresponds to said stronger first wireless signal 131.

In one embodiment, each personal mobile terminal 200 is used for receiving and identifying the first wireless signal 131 broadcasted by the first wireless signal broadcasting component 130 of at least one of the plurality of elevator cabins 110. Specifically, when the first wireless signal 131 is a Bluetooth low energy signal, the personal mobile terminal 200 can specifically be an intelligent terminal like a smart mobile phone having a Bluetooth communication module, a wearable intelligent device (e.g. a smart bracelet), a personal digital assistant (PDA), etc. The Bluetooth communication module chooses to receive the Bluetooth low energy signal having relatively stronger intensity and identifies said Bluetooth low energy signal by identifying the ID information therein, i.e. determines from which elevator cabin 110 the Bluetooth low energy signal is broadcasted; the personal mobile terminal 200 can also be provided with a received signal strength indicator (RSSI) for determining the signal intensity of the received Bluetooth low energy signal or any other Bluetooth signals.

In one embodiment, each personal mobile terminal 200 can analyze a change of intensity of the received current first wireless signal 131, for example, substantially becoming stronger gradually or substantially becoming weaker gradually; the personal mobile terminal 200 is further configured to determine the movement of the passenger 90 relative to one of the plurality of elevator cabins 110 on the basis of the change of intensity of the received first wireless signal 131, i.e. determine the movement relative to the elevator cabin 110 that broadcasts said first wireless signal 131, and then judge whether said movement is a movement for entering into the right elevator cabin based on the above result of identification of the ID information.

Take the scene as shown in Fig. 1 as an example, when three elevator cabins 110-1, 110-2 and 110-3 land at the floor station where the passenger 90 is located, assume that the cabin doors 113-1 and 113-3 of elevator cabins 110-1 and 110-3 open, and the cabin door 113-2 of the elevator cabin 110-2 is closed, then the passenger 90 can sense first wireless signals 113-1 and 131-3, but since the passenger 90 in the elevator floor station area is relatively closer to the elevator cabin 110-3, the sensed first wireless signal 131-3 is much stronger, and the personal mobile terminal 200 carried by the passenger 90 will choose to receive the first wireless signal 131-3, and identify said first wireless signal 131-3 and determine the intensity of said received first wireless signal 131-3.

It is assumed that the passenger 90 moves towards the elevator cabin 110-3 along a direction of the dashed line shown in Fig. 1, then the personal mobile terminal 200 will be able to determine that the received first wireless signal 131-3 gradually becomes stronger, thereby determining that the current movement of the passenger 90 is approaching the elevator cabin 131-3.

If the elevator cabin 131-3 is just the designated elevator cabin, i.e. it is the right elevator cabin for the passenger 90, then the personal mobile terminal 200 can determine the elevator cabin corresponding to said movement based on the identified ID information, e.g., determine that the approaching movement is an approaching movement corresponding to the elevator cabin 131-3, i.e. a movement of approaching the right elevator cabin, thereby determining that said movement is a movement for entering into the right elevator cabin.

If the elevator cabin 131-1 is the designated elevator cabin (elevator cabin 131-3 is not the right elevator cabin), then the personal mobile terminal 200 can determine the elevator cabin corresponding to said movement based on the identified ID information, e.g., determine that the approaching movement is an approaching movement corresponding to the elevator cabin 131-1, i.e. a movement away from the right elevator cabin, thereby determining that said movement does not correspond to a movement for entering into the right elevator cabin.

The personal mobile terminal 200 can send different guiding signals based on the above results of determination, and in said embodiments, it sends non-visual guiding signals, so that the passenger 90 can be guided into the right elevator cabin without looking at the personal mobile terminal, thus realizing a hand-free effect, which provides great convenience to the passenger and improves passenger experience. In one embodiment, the guiding signals can be vibration signal, or voice prompt signals or a combination thereof.

In one embodiment, if it is determined that the current movement of the passenger 90 corresponds to the movement for entering into the right elevator cabin, it is quite likely that the passenger 90 can determine which elevator cabin 110 is the right one, so the personal mobile terminal 200 may send no guiding signal. If it is determined that the current movement of the passenger 90 does not correspond to the movement for entering into the right elevator cabin, the personal mobile terminal 200 will enhance the vibration signal and/or send voice prompt signals, and upon sensing said vibration signal and/or hearing said voice prompt signals, the passenger 90 will change the current movement; for example, the passenger 90 change direction to move towards the elevator cabin 131-1 (if the elevator cabin 131-1 is the right elevator cabin), i.e. the passenger 90 first moves away from the elevator cabin 131-3, and the vibration signal of the personal mobile terminal 200 will weaken gradually, then the personal mobile terminal 200 of the passenger 90 will receive the first wireless signal 131-1 until entering into the elevator cabin 131-1. Said movement of approaching the elevator cabin 131-1 is detected and is determined as corresponding to the movement for entering into the right elevator cabin, and the personal mobile terminal 200 will not send any vibration signal to hold back the current movement of the passenger 90, thus the passenger 90 will be guided into the right elevator cabin.

Still referring to Fig. 1, in one embodiment, the guiding system 10 further comprises a second wireless signal broadcasting component 150 installed at the elevator floor station area for sending information of the corresponding right elevator cabin to the personal mobile terminal 200.

In one embodiment, the second wireless signal broadcasting component 150 is also a component of the elevator system for realizing the function of automatic elevator call. In each elevator floor station area, one or more second wireless signal broadcasting components 150 may be installed, for example, two second wireless signal broadcasting components are installed, which are second wireless signal broadcasting components 150-1 and 150-2. The second wireless signal broadcasting components 150 can continuously transmit or broadcast second wireless signals 151, for example, the second wireless signal broadcasting components 150-1 and 150-2 broadcast second wireless signals 151-1 and 151-2, respectively, and when the personal mobile terminal 200 approaches the second wireless signal broadcasting components 150, or when it enters into the elevator floor station area 410, it will automatically establish wireless communication connection with one of the second wireless signal broadcasting components 150, so that the personal mobile terminal 200 can automatically send an elevator call request command to the second wireless signal broadcasting component 150, and the second wireless signal broadcasting component 150 receives said elevator call request command. In an example, a distance from the personal mobile terminal 200 to the second wireless signal broadcasting component 150 is determined according to the intensity of the second wireless signal received by the personal mobile terminal 200, and when the distance is smaller than or equal to a predefined distance threshold, the personal mobile terminal 200 automatically establishes wireless communication connection to the second wireless signal broadcasting component 150.

The elevator call request command can be an elevator call request command including an elevator call direction and a destination floor, and the second wireless signal broadcasting component 150 can establish a connection with an elevator controller of the elevator system and automatically send said elevator call request command to the elevator controller. The elevator controller is used for controlling operation of a plurality of elevator cabins 110 in the elevator system, for example, it performs scheduling control according to said elevator call request command to designate one of the plurality of elevator cabins 110 to land at the floor station of the passenger 90 and carry the passenger 90 to a corresponding destination floor. The designated elevator cabin 110 also has the destination floor of the passenger 90 registered therein in advance, for example, the destination floor is registered automatically on the floor registration control panel. In this case, the passenger 90 can totally realize automatic elevator call and can perform the elevator call operation in a hand-free manner.

The second wireless signal broadcasted by the second wireless signal broadcasting component 150 may include information of the designated elevator cabin as received from the elevator controller, and the personal mobile terminal 200 can receive and temporarily store said information of the designated elevator cabin. Said information of the designated elevator cabin will be compared, in the personal mobile terminal 200, to the elevator cabin 110 corresponding to the identified first wireless signal 131 so as to determine whether the current movement of the passenger 90 corresponds to a movement to the right elevator cabin.

When the passenger 90 enters into the right elevator cabin or arrives at the destination floor, the personal mobile terminal 200 may delete the above-mentioned temporarily stored information of the designated elevator cabin.

When the guiding system 10 according to one embodiment of the present invention is applied to the elevator system that can realize the elevator call operation in a hand-free manner as described in the above embodiment, the passenger 90 may totally operate in a hand-free manner in the process from calling an elevator to arriving at the destination floor, and it is unnecessary to take the personal mobile terminal 200 out of, for example, the pocket to look at it, besides, it is unlikely for the passenger to enter into the wrong elevator, thus ensuring operation efficiency of the elevator system while greatly improving passenger experience.

It shall be noted that the guiding system 10 is not limited to be applied to the elevator system in which the elevator call operation is performed in a hand-free manner, and the right elevator cabin is not limited to the designated elevator cabin. In other application scenarios, for example, if the elevator cabin 110-1 as shown in Fig. 1 runs between the first to the N^{th} floor stations, and the elevator cabin 110-3 does not stop and land at the second to N^{th} floor stations, and if the destination floor of the passenger 90 is the (N+1)^{th} floor, then the elevator cabin 110-1 will be set as the wrong elevator cabin at the personal mobile terminal 200 of the passenger 90, and the elevator cabin 110-3 will be set as the right elevator cabin at the personal mobile terminal 200 of the passenger 90; when the passenger 90 approaches the elevator cabin 110-1 at the first floor, the personal mobile terminal 200 will send or enhance the vibration signal to remind the passenger 90 that the current movement is not toward the right elevator cabin.

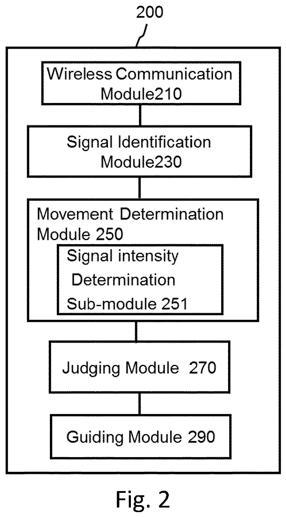

Fig. 2 is a structural diagram of modules of a personal mobile terminal according to one embodiment of the present invention. The personal mobile terminal 200 according to one embodiment of the present invention is applied to the guiding system 10 as shown in Fig. 1, and it may include a wireless communication module 210, a signal identification module 230, a movement determination module 250, a judging module 270 and a guiding module 290.

In one embodiment, the wireless communication module 210 is used for at least receiving an identifiable first wireless signal 131, wherein said first wireless signal is broadcasted from one of a plurality of elevator cabins 110, and an intensity of said first wireless signal 131 substantially decreases as the broadcasting distance increases. When the first wireless signal 131 is a Bluetooth signal, the wireless communication module 210 can specifically be a Bluetooth communication module. The wireless communication module 210 might be able to sense the first wireless signals 131 broadcasted from the plurality of elevator cabins 110, and the wireless communication module 210 can be configured to choose to receive the first wireless signal 131 having a relatively stronger intensity, then it also means that the personal mobile terminal 200 is closest to the elevator cabin 110 that corresponds to said stronger first wireless signal 131.

In one embodiment, the signal identification module 230 is used for identifying the received first wireless signal 131 to determine from which one of the plurality of elevator cabins 110 said first wireless signal 131 is broadcasted, as an example, the elevator cabin 110 corresponding to said first wireless signal 131 is determined by reading and identifying ID information in the received first wireless signal 131.

In one embodiment, the movement determination module 250 is used for determining movement of the passenger 90 relative to one of the plurality of elevator cabins 110 based on a change of intensity of the received first wireless signal 131. The movement determination module 250 may include a signal intensity determination sub-module 251 for determining in real time the intensity of the received first wireless signal 131, and the movement determination module 250 can be implemented by RSSI, for example. The movement determination module 250 can thus continuously determine intensity of the first wireless signal 131 and learn the change of intensity of the first wireless signal 131, such as becoming stronger gradually or becoming weaker gradually. When the intensity of the first wireless signal 131 becomes stronger gradually, the movement determination module 250 determines that the current movement of the passenger 90 is approaching the elevator cabin 110 corresponding to said first wireless signal 131, when the intensity of the first wireless signal 131 becomes weaker gradually, the movement determination module 250 determines that the current movement of the passenger 90 is moving away from the elevator cabin 110 corresponding to said first wireless signal 131. In this case, the direction of movement of the passenger 90 relative to the elevator cabin 110 corresponding to said first wireless signal 131 can be determined according to the change of intensity of the first wireless signal 131.

In one embodiment, the judging module 270 is used for judging whether the movement is a movement for entering into the right elevator cabin based on the result of identification. Specifically, if the elevator cabin 110 corresponding to the identified first wireless signal 131 is the right elevator cabin stored in the personal mobile terminal 200, then the movement is a movement to the right elevator cabin, and if said movement is a movement approaching said elevator cabin, then it can be further determined that said movement is the movement for entering into the right elevator cabin.

In one embodiment, the guiding module 270 is used for guiding the passenger 90 to enter into the right elevator cabin through change of the vibration signal and/or voice prompt signals based on the result of judgement of the judging module 270. When it is determined that the current movement of the passenger 90 corresponds to the movement for entering into the right elevator cabin, it is quite likely that the passenger 90 can determine which elevator cabin 110 is the right one, so the personal mobile terminal 200 may send no guiding signal. If it is determined that the current movement of the passenger 90 does not correspond to the movement for entering into the right elevator cabin, the guiding module 270 will enhance the vibration signal and/or send voice prompt signals, and upon sensing said vibration signal and/or hearing said voice prompt signals, the passenger 90 will change the current movement; for example, as shown in Fig. 1, the passenger 90 change guideion to move towards the elevator cabin 131-1 (if the elevator cabin 131-1 is the right elevator cabin), i.e. the passenger 90 first moves away from the elevator cabin 131-3, and the vibration signal of the personal mobile terminal 200 will weaken gradually, then the personal mobile terminal 200 of the passenger 90 will receive the first wireless signal 131-1 until entering into the elevator cabin 131-1. Said movement of approaching the elevator cabin 131-1 is detected and is judged as corresponding to the movement for entering into the right elevator cabin, and the personal mobile terminal 200 will not send any vibration signal to hold back the current movement of the passenger 90, thus the passenger 90 will be guided into the right elevator cabin.

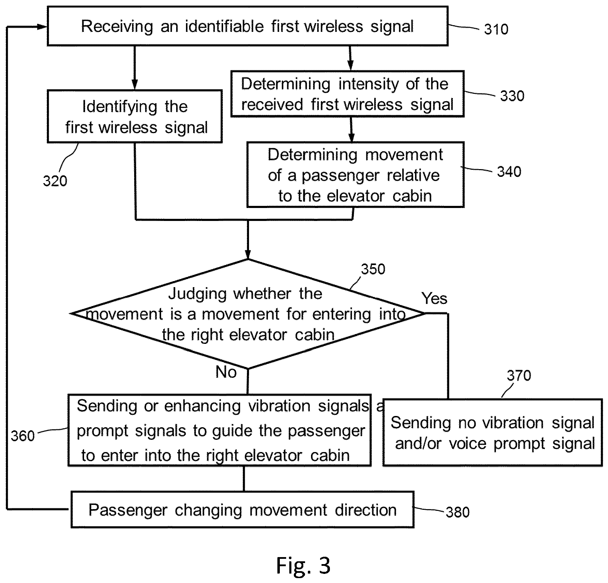

Fig. 3 is a flow chart of a method for guiding a passenger to enter into the right elevator cabin according to one embodiment of the present invention. The guiding method in the embodiment shown in Fig. 3 can be carried out in the personal mobile terminal 200, and the guiding method of the embodiment of the present invention will be described with reference to Figs. 1-3.

First, in step S310, an identifiable first wireless signal is received. In one embodiment, when the passenger 90 carrying the personal mobile terminal 200 is waiting for the elevator in the elevator floor station area, if an elevator cabin door 113 of any one of the elevator cabins 110 opens, the wireless communication module 210 will be able to sense the first wireless signals 131 broadcasted from the elevator cabin 110 and will further choose to receive the strongest first wireless signal, i.e. establish a connection with the first wireless signal broadcasting component 130 corresponding to said first wireless signal 131.

The received first wireless signal can be identified, i.e. step S320, and said step can be performed in the signal identification module 230 of the personal mobile terminal 200.

Meanwhile, the intensity of the received first wireless signal 131 is determined, i.e. step S330, and said step can be performed in the signal intensity determination sub-module 251 of the personal mobile terminal 200.

Further, in step S340, movement of the passenger 90 relative to one of the plurality of elevator cabins 110 is determined based on the intensity of the received first wireless signal 131, i.e. the current movement of the passenger 90 relative to the elevator cabin 110 corresponding to the first wireless signal 131 is determined, for example, when the intensity of the received first wireless signal 131 is becoming stronger and stronger, it is determined that the current movement of the passenger 90 is approaching the elevator cabin 110 corresponding to the first wireless signal 131, otherwise, it is determined that passenger 90 is moving away from the elevator cabin 110. Said step S340 can be performed in the movement determination module 250 of the personal mobile terminal 200.

Further, in step S350, it is judged whether the movement determined in step S340 corresponds to the movement for entering into the right elevator cabin based on the result of identification obtained in step S320. Specifically, the elevator cabin corresponding to the result of identification, i.e. the elevator cabin corresponding to the movement as determined in step S340, is compared to the temporarily stored right elevator cabin, if they are the same, then said movement is a movement corresponding to the right elevator cabin, further, if said movement is approaching the elevator cabin, then said movement is the movement for entering into the right elevator cabin; otherwise, it is judged that said movement is not the movement for entering into the right elevator cabin. Said step S350 can be performed in the judging module 270 of the personal mobile terminal 200.

If it is judged as "yes" in step S350, then step S370 is performed without sending any vibration signal and/or voice prompt signal, namely, no guiding signal is sent to hold back the current movement of the passenger 90. In other embodiments, of course, voice prompt signals can be sent which remind that the passenger has entered into the right elevator cabin, or the vibration signal may be weakened to remind that the passenger is getting closer to the right elevator cabin.

If it is judged as "no" in step S350, then step S360 is performed to send or enhance the vibration signal and/or send voice prompt signals to guide the passenger to enter into the right elevator cabin. Specifically, prompted by the strong vibration signal and/or voice prompt signals, the passenger 90 may very likely change the movement, i.e. step S380, then steps S310-S350 are performed again until the passenger 90 moves towards the right elevator cabin and the determination in step S350 becomes a "yes".

The above steps S360 and S370 can be performed in the guiding module 290 of the personal mobile terminal 200.

The above steps S310-S370 can all be performed when the screen of the personal mobile terminal 200 is turned off, and the passenger 90 does not need to look at or operate the personal mobile terminal 200.

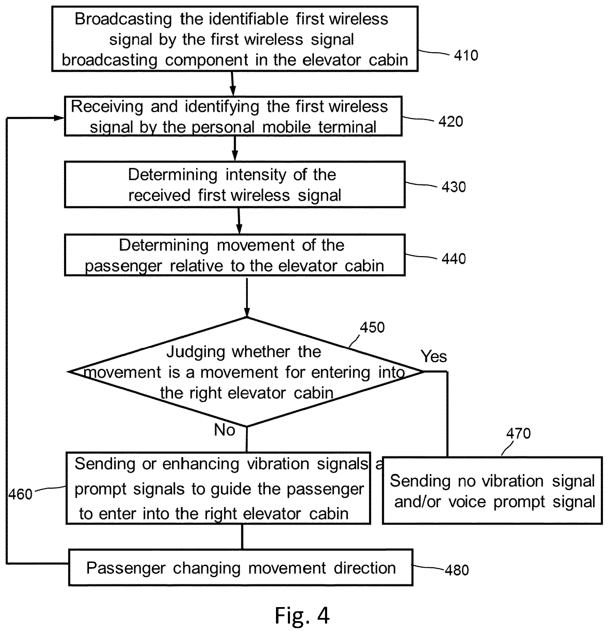

Fig. 4 is a flow chart of a method for guiding a passenger to enter into the right elevator cabin according to another embodiment of the present invention. The guiding method of the embodiment shown in Fig. 4 can be carried out in the guiding system 10, and the guiding method of the embodiment of the present invention will be described with reference to Figs. 1-4.

First, in step S410, the first wireless signal broadcasting component 130 in the elevator cabin 110 broadcasts identifiable first wireless signal 131. The first wireless signal broadcasting component 130 can continuously broadcast the first wireless signal 131, or it can broadcast the first wireless signal 131 only when the cabin door 113 of the elevator cabin 110 opens. When the cabin door 113 opens, the first wireless signal 131 can be broadcasted to the elevator floor station area outside of the elevator cabin 110, so that it can be received and identified by the personal mobile terminal 200 of the passenger 90 in the elevator floor station area, i.e. step S420.

Further, in step S430, the personal mobile terminal 200 determines the intensity of the received first wireless signal 131.

Further in step S440, movement of the passenger 90 relative to one of the plurality of elevator cabins 110 is determined based on the intensity of the received first wireless signal 131, i.e. the current movement of the passenger 90 relative to the elevator cabin 110 corresponding to the first wireless signal 131 is determined.

Further, in step S450, it is judged whether the movement determined in step S440 corresponds to the movement for entering into the right elevator cabin based on the result of identification obtained in step S420. Specifically, the elevator cabin corresponding to the result of identification, i.e. the elevator cabin corresponding to the movement as determined in step S440, is compared to the temporarily stored right elevator cabin, if they are the same, then said movement is a movement corresponding to the right elevator cabin, further, if said movement is approaching the elevator cabin, then said movement is the movement for entering into the right elevator cabin; otherwise, said movement is not the movement for entering into the right elevator cabin.

If it is judged as "yes" in step S450, then step S470 is performed without sending any vibration signal and/or voice prompt signal, namely, no guiding signal is sent to hold back the current movement of the passenger 90. In other embodiments, of course, voice prompt signals can be sent which remind that the passenger has entered into the right elevator cabin, or the vibration signal may be weakened to remind that the passenger is getting closer to the right elevator cabin.

If it is judged as "no" in step S450, then step S460 is performed to send or enhance the vibration signal and/or send voice prompt signals to guide the passenger to enter into the right elevator cabin. Specifically, prompted by the strong vibration signal and/or voice prompt signals, the passenger 90 may very likely change the movement, i.e. step S480, then steps S410-S450 are performed again until the passenger 90 moves towards the right elevator cabin and the determination in step S450 becomes a "yes".

By means of the guiding method in the embodiments shown in Figs. 3 and 4, the passenger 90 can be conveniently guided into the right elevator cabin, thus avoiding the passenger entering into the wrong elevator cabin and improving operation efficiency of the elevator system.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "service", "circuit", "circuitry" "module" and/or "processing system". Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Program code and/or executable instructions embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer (device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Computer program instructions may be provided to a processor of a general purpose computer, special purpose computer, such as an image processor or other programmable data processing apparatus to produce a machine, such that the instructions, which execute via the processor of the computer or other programmable data processing apparatus, create means for implementing the functions/acts specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions and acts specified herein.

It shall also be noted that in some alternative implementations, the functions/operations indicated in the blocks may not take place in the order shown in the flow chart. For example, two blocks shown sequentially may actually be carried out at substantially the same time, or they can be carried out in an inverted sequence sometimes, depending on the functions/operations involved. Although particular step sequences are shown, disclosed, and claimed, it should be appreciated that steps may be performed in any order, separated or combined unless otherwise indicated and will still benefit from the present disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (10) for guiding a passenger (90) to enter into a right elevator cabin (110-1, 110-2, 110-3), **characterised by** comprising:
first wireless signal broadcasting components (130-1, 130-2, 130-3) installed in a plurality of the elevator cabins (110-1, 110-2, 110-3) for broadcasting identifiable first wireless signals (131-1, 131-2, 131-3), wherein intensities of said first wireless signals (131-1, 131-2, 131-3) decrease substantially as the distance of broadcasting increases; and
a personal mobile terminal (200) carried by the passenger (90) for receiving and identifying the first wireless signal (131-1, 131-2, 131-3) broadcast by the first wireless signal broadcasting component (130-1, 130-2, 130-3) in at least one of the plurality of elevator cabins (110-1, 110-2, 110-3), and determining an intensity of the received first wireless signal (131-1, 131-2, 131-3);
wherein, the personal mobile terminal (200) is configured to determine movement of the passenger (90) relative to one of the plurality of elevator cabins (110-1, 110-2, 110-3) on the basis of the change of intensity of the received first wireless signal (131-1, 131-2, 131-3), and to further judge, based on the result of identification, whether the movement is a movement for entering into the right elevator cabin (110-1, 110-2, 110-3).

2. The system (10) according to claim 1, wherein said personal mobile terminal (200) is further configured to guide, based on the result of judgement, the passenger (90) to enter into the right elevator cabin (110-1, 110-2, 110-3) by means of a change of vibration signal and/or voice prompt signals.

3. The system (10) according to claim 2, wherein said personal mobile terminal (200) is further configured to enhance the vibration signal and/or send voice prompt signals when the movement does not correspond to the movement for entering into the right elevator cabin (110-1, 110-2, 110-3).

4. The system (10) according to any preceding claim, wherein said first wireless signal (131-1, 131-2, 131-3) includes ID information of the elevator cabin (110-1, 110-2, 110-3) in which the first wireless signal broadcasting component (130-1, 130-2, 130-3) is installed correspondingly;
said personal mobile terminal (200) is further configured to identify the ID information in the first wireless signal and judge on the basis of the result of identifying the ID information, whether the movement is a movement corresponding to the right elevator cabin (110-1, 110-2, 110-3).

5. The system (10) according to any preceding claim, wherein the right elevator cabin (110-1, 110-2, 110-3) is temporarily stored in a memory of said personal mobile terminal (200).

6. The system (10) according to any preceding claim, wherein the first wireless signal broadcasting component (130-1, 130-2, 130-3) is a Bluetooth Low Energy (BLE) module, and the first wireless signal (131-1, 131-2, 131-3) is a BLE signal.

7. The system (10) according to any preceding claim, further comprising: a second wireless signal broadcasting component (150-1, 150-2) installed at the elevator floor station area for sending information of the right elevator cabin (110-1, 110-2, 110-3) to the personal mobile terminal (200).

8. An elevator system, which comprises a plurality of elevator cabins (110-1, 110-2, 110-3) and an elevator controller, and comprising the system (10) for guiding a passenger to enter into the right elevator cabin according to any preceding claim.

9. The elevator system according to claim 8, wherein said system (10) further comprises a second wireless signal broadcasting component (150-1, 150-2) installed at the elevator floor station area, said second wireless signal broadcasting component (150-1, 150-2) being configured to broadcast a second wireless signal (151-1, 151-2), automatically establish a wireless communication connection with the personal mobile terminal (200) based on said second wireless signal (151-1, 151-2), and receive an elevator call request command automatically sent from the personal mobile terminal (200) when establishing said wireless communication connection.

10. The elevator system according to claim 9, wherein said personal mobile terminal (200) is further configured to determine a distance from said personal mobile terminal (200) to the second wireless signal broadcasting component (150-1, 150-2) according to the intensity of the second wireless signal (151-1, 151-2), and to automatically establish the wireless communication connection when the distance is smaller than or equal to a predefined distance threshold.

11. The elevator system according to claim 9 or 10, wherein said second wireless signal broadcasting component (150-1, 150-2) is used for sending the elevator call request command to the elevator controller;
wherein said elevator controller is used for designating a corresponding elevator cabin (110-1, 110-2, 110-3) for the passenger (90) according to said elevator call request command, and said elevator system (10) is used for sending information of the designated elevator cabin (110-1, 110-2, 110-3) to the personal mobile terminal (200) through said second wireless signal broadcasting component (150-1, 150-2).

12. A method for guiding a passenger (90) to enter into the right elevator cabin (110-1, 110-2, 110-3), comprising the steps of
receiving an identifiable first wireless signal (131-1, 131-2, 131-3), wherein said first wireless signal (131-1, 131-2, 131-3) is broadcast from at least one of a plurality of elevator cabins (110-1, 110-2, 110-3), and an intensity of said first wireless signal (131-1, 131-2, 131-3) substantially decreases as the broadcasting distance increases;
identifying the received first wireless signal (131-1, 131-2, 131-3) to determine from which one of the plurality of elevator cabins (110-1, 110-2, 110-3) said first wireless signal (131-1, 131-2, 131-3) is broadcast;
determining, on the basis of the change of intensity of the received first wireless signal (131-1, 131-2, 13 1-3), a movement of the passenger (90) relative to one of the plurality of elevator cabins (110-1, 110-2, 110-3); and
judging, on the basis of the result of identification, whether the movement is a movement for entering into the right elevator cabin (110-1, 110-2, 110-3).

13. The method according to claim 12, wherein the method further includes a step of
guiding, based on the result of judgement, the passenger (90) to enter into the right elevator cabin (110-1, 110-2, 110-3) by means of change of vibration signal and/or voice prompt signals;
optionally wherein in the step of guiding the passenger (90) to enter into the right elevator cabin (110-1, 110-2, 110-3), when the movement corresponds to the movement for entering into the right elevator cabin (110-1, 110-2, 110-3), no vibration signal is sent or the vibration signal is weakened; when the movement does not correspond to the movement for entering into the right elevator cabin (110-1, 110-2, 110-3), the vibration signal is enhanced and/or voice prompt signals are sent; and/or
optionally, wherein said first wireless signal (131-1, 131-2, 131-3) includes ID information of the elevator cabin (110-1, 110-2, 110-3) in which the first wireless signal broadcasting component (130-1, 130-2, 130-3) is installed; and
ID information in said first wireless signal (131-1, 131-2, 131-3) is identified in the identifying step, and/or
optionally, wherein in the step of judging, said ID information is compared to the ID information of the right elevator cabin (110-1, 110-2, 110-3), if they are the same, it is determined that the movement is a movement to the right elevator cabin (110-1, 110-2, 110-3); and/or
optionally, wherein in the step of determining the movement, if the intensity of the received first wireless signal (131-1, 131-2, 131-3) is becoming stronger gradually, it is determined that the movement of the passenger (90) is approaching the elevator cabin (110-1, 110-2, 110-3) corresponding to said first wireless signal (131-1, 131-2, 131-3); if the intensity of the received first wireless signal (131-1, 131-2, 131-3) is becoming weaker gradually, it is determined that the movement of the passenger (90) is moving away from the elevator cabin (110-1, 110-2, 110-3) corresponding to said first wireless signal (131-1, 131-2, 131-3); and/or
optionally, wherein said first wireless signal (131-1, 131-2, 131-3) is a BLE signal.

14. A computer-readable storage medium having a computer program stored thereon, wherein said program is executed by a processor of the personal mobile terminal (200) of the system (10) of claim 1, to carry out the steps of the method of claim 12, and optionally one or more steps of the method of claim 13.

## Patentansprüche

1. System (10) zum Führen eines Passagiers (90) zum Betreten der richtigen Aufzugskabine (110-1, 110-2, 110-3), **dadurch gekennzeichnet, dass** es umfasst:
erste Drahtlossignalsendekomponenten (130-1, 130-2, 130-3), die in einer Vielzahl von Aufzugskabinen (110-1, 110-2, 110-3) zum Aussenden identifizierbarer erster Drahtlossignale (131-1, 131-2, 131-3) installiert sind, wobei Stärken der ersten Drahtlossignale (131-1, 131-2, 131-3) mit zunehmender Sendeentfernung wesentlich abnehmen; und
ein durch den Passagier (90) getragenes persönliches mobiles Endgerät (200) zum Empfangen und Identifizieren des ersten Drahtlossignals (131-1, 131-2, 131-3), das von der ersten Drahtlossignalsendekomponente (130-1, 130-2, 130-3) in mindestens einer der Vielzahl von Aufzugskabinen (110-1, 110-2, 110-3) ausgesendet wird, und Bestimmen einer Stärke des empfangenen ersten Drahtlossignals (131-1, 131-2, 131-3);
wobei das persönliche mobile Endgerät (200) dazu konfiguriert ist, die Bewegung des Passagiers (90) relativ zu einer der Vielzahl von Aufzugskabinen (110-1, 110-2, 110-3) auf Grundlage der Stärkenänderung des empfangenen ersten Drahtlossignals (131-1, 131-2, 131-3) zu bestimmen und ferner auf Grundlage des Ergebnisses der Identifizierung zu beurteilen, ob die Bewegung eine Bewegung zum Betreten der richtigen Aufzugskabine (110-1, 110-2, 110-3) ist.

2. System (10) nach Anspruch 1, wobei das persönliche mobile Endgerät (200) ferner dazu konfiguriert ist, auf Grundlage des Ergebnisses der Beurteilung den Passagier (90) mittels einer Änderung eines Vibrationssignals und/oder von Sprachaufforderungssignalen so zu führen, dass er die richtige Aufzugskabine (110-1, 110-2, 110-3) betritt.

3. System (10) nach Anspruch 2, wobei das persönliche mobile Endgerät (200) ferner dazu konfiguriert ist, das Vibrationssignal zu verstärken und/oder Sprachaufforderungssignale zu senden, wenn die Bewegung nicht der Bewegung zum Betreten der richtigen Aufzugkabine (110-1, 110-2, 110-3) entspricht.

4. System (10) nach einem der vorhergehenden Ansprüche, wobei das erste Drahtlossignal (131-1, 131-2, 131-3) Kennungsinformationen der Aufzugskabine (110-1, 110-2, 110-3) beinhaltet, in der die erste Drahtlossignalsendekomponente (130-1, 130-2, 130-3) auf entsprechende Weise installiert ist; wobei das persönliche mobile Endgerät (200) ferner dazu konfiguriert ist, die Kennungsinformationen in dem ersten Drahtlossignal zu identifizieren und auf Grundlage des Ergebnisses des Identifizierens der Kennungsinformationen zu beurteilen, ob die Bewegung eine Bewegung ist, die der richtigen Aufzugskabine (110-1, 110-2, 110-3) entspricht.

5. System (10) nach einem der vorhergehenden Ansprüche, wobei die richtige Aufzugskabine (110-1, 110-2, 110-3) vorübergehend in einem Speicher des persönlichen mobilen Endgeräts (200) gespeichert ist.

6. System (10) nach einem der vorhergehenden Ansprüche, wobei die erste Drahtlossignalsendekomponente (130-1, 130-2, 130-3) ein Bluetooth-Low-Energy(BLE)-Modul ist und das erste Drahtlossignal (131-1, 131-2, 131-3) ein BLE-Signal ist.

7. System (10) nach einem der vorhergehenden Ansprüche, ferner umfassend: eine zweite Drahtlossignalsendekomponente (150-1, 150-2), die im Bereich der Aufzugetagenstation installiert ist, um Informationen der richtigen Aufzugkabine (110-1, 110-2, 110-3) an das persönliche mobile Endgerät (200) zu senden.

8. Aufzugsystem, das eine Vielzahl von Aufzugskabinen (110-1, 110-2, 110-3) und eine Aufzugsteuerung umfasst und das System (10) zum Führen eines Passagiers zum Betreten der richtigen Aufzugskabine nach einem der vorhergehenden Ansprüche umfasst.

9. Aufzugsystem nach Anspruch 8, wobei das System (10) ferner eine zweite Drahtlossignalübertragungskomponente (150-1, 150-2) umfasst, die im Bereich der Aufzugetagenstation installiert ist, wobei die zweite Drahtlossignalübertragungskomponente (150-1, 150-2) dazu konfiguriert ist, ein zweites Drahtlossignal (151-1, 151-2) auszusenden, automatisch eine Drahtloskommunikationsverbindung mit dem persönlichen mobilen Endgerät (200) auf Grundlage des zweiten Drahtlossignals (151-1, 151-2) herzustellen und einen Aufzugrufanforderungsbefehl zu empfangen, der automatisch von dem persönlichen mobilen Endgerät (200) gesendet wird, wenn die Drahtloskommunikationsverbindung hergestellt wird.

10. Aufzugsystem nach Anspruch 9, wobei das persönliche mobile Endgerät (200) ferner dazu konfiguriert ist, eine Entfernung von dem persönlichen mobilen Endgerät (200) zu der zweiten Drahtlossignalsendekomponente (150-1, 150-2) gemäß der Stärke des zweiten Drahtlossignals (151-1, 151-2) zu bestimmen und die Drahtloskommunikationsverbindung automatisch herzustellen, wenn die Entfernung geringer oder gleich einer vordefinierten Entfernungsschwelle ist.

11. Aufzugsystem nach Anspruch 9 oder 10, wobei die zweite Drahtlossignalsendekomponente (150-1, 150-2) zum Senden des Aufzugrufanforderungsbefehls an die Aufzugsteuerung verwendet wird;
wobei die Aufzugsteuerung zum Zuweisen einer entsprechenden Aufzugskabine (110-1, 110-2, 110-3) für den Passagier (90) gemäß dem Aufzugrufanforderungsbefehl verwendet wird und das Aufzugsystem (10) zum Senden von Informationen der zugewiesenen Aufzugskabine (110-1, 110-2, 110-3) an das persönliche mobile Endgerät (200) durch die zweite Drahtlossignalsendekomponente (150-1, 150-2) verwendet wird.

12. Verfahren zum Führen eines Passagiers (90) zum Betreten der richtigen Aufzugskabine (110-1, 110-2, 110-3), umfassend die Schritte:
Empfangen eines identifizierbaren ersten Drahtlossignals (131-1, 131-2, 131-3), wobei das erste Drahtlossignal (131-1, 131-2, 131-3) von mindestens einer von einer Vielzahl von Aufzugskabinen (110-1, 110-2, 110-3) gesendet wird und eine Stärke des ersten Drahtlossignals (131-1, 131-2, 131-3) mit zunehmender Sendeentfernung wesentlich abnimmt;
Identifizieren des empfangenen ersten Drahtlossignals (131-1, 131-2, 131-3), um zu bestimmen, von welcher der Vielzahl von Aufzugskabinen (110-1, 110-2, 110-3) das erste Drahtlossignal (131-1, 131-2, 131-3) gesendet wird;
Bestimmen, auf Grundlage der Stärkenänderung des empfangenen ersten Drahtlossignals (131-1, 131-2, 131-3), einer Bewegung des Passagiers (90) relativ zu einer der Vielzahl von Aufzugskabinen (110-1, 110-2, 110-3); und
Beurteilen auf Grundlage des Identifikationsergebnisses, ob die Bewegung eine Bewegung zum Betreten der richtigen Aufzugskabine (110-1, 110-2, 110-3) ist.

13. Verfahren nach Anspruch 12, wobei das Verfahren ferner einen Schritt zu Folgendem beinhaltet:
Führen, auf Grundlage des Ergebnisses der Beurteilung, des Passagiers (90) so, dass er die richtige Aufzugskabine (110-1, 110-2, 110-3) betritt, mittels einer Änderung eines Vibrationssignals und/oder von Sprachaufforderungssignalen;
wobei im Schritt des Führens des Passagiers (90) zum Betreten der richtigen Aufzugskabine (110-1, 110-2, 110-3) wahlweise, wenn die Bewegung der Bewegung zum Betreten der richtigen Aufzugskabine (110-1, 110-2, 110-3) entspricht, kein Vibrationssignal gesendet wird oder das Vibrationssignal abgeschwächt wird; wenn die Bewegung nicht der Bewegung zum Betreten der richtigen Aufzugskabine (110-1, 110-2, 110-3) entspricht, das Vibrationssignal verstärkt wird und/oder Sprachaufforderungssignale gesendet werden; und/oder
wobei wahlweise das erste Drahtlossignal (131-1, 131-2, 131-3) Kennungsinformationen der Aufzugskabine (110-1, 110-2, 110-3) beinhaltet, in der die erste Drahtlossignalsendekomponente (130-1, 130-2, 130-3) installiert ist; und
Kennungsinformationen in dem ersten Drahtlossignal (131-1, 131-2, 131-3) im Identifizierungsschritt identifiziert werden, und/oder
wobei wahlweise im Schritt des Beurteilens die Kennungsinformationen mit den Kennungsinformationen der richtigen Aufzugskabine (110-1, 110-2, 110-3) verglichen werden, wenn sie gleich sind, bestimmt wird, dass die Bewegung eine Bewegung zur richtigen Aufzugskabine (110-1, 110-2, 110-3) ist; und/oder
wobei wahlweise im Schritt des Bestimmens der Bewegung, wenn die Stärke des empfangenen ersten Drahtlossignals (131-1, 131-2, 131-3) allmählich stärker wird, bestimmt wird, dass die Bewegung des Passagiers (90) sich der Aufzugskabine (110-1, 110-2, 110-3) nähert, die dem ersten Drahtlossignal (131-1, 131-2, 131-3) entspricht; wenn die Stärke des empfangenen ersten Drahtlossignals (131-1, 131-2, 131-3) allmählich schwächer wird, bestimmt wird, dass sich die Bewegung des Passagiers (90) von der Aufzugskabine (110-1, 110-2, 110-3) entfernt, die dem ersten Drahtlossignal (131-1, 131-2, 131-3) entspricht; und/oder
wobei wahlweise das erste Drahtlossignal (131-1, 131-2, 131-3) ein BLE-Signal ist.

14. Computerlesbares Speichermedium mit einem darauf gespeicherten Computerprogramm, wobei das Programm durch einen Prozessor des persönlichen mobilen Endgeräts (200) des Systems (10) nach Anspruch 1 ausgeführt wird, um die Schritte des Verfahrens nach Anspruch 12 und wahlweise einen oder mehrere Schritte des Verfahrens nach Anspruch 13 auszuführen.

## Revendications

1. Système (10) pour guider un passager (90) à entrer dans une bonne cabine d'ascenseur (110-1, 110-2, 110-3), **caractérisé en ce qu'**il comprend :
des premiers composants de diffusion de signal sans fil (130-1, 130-2, 130-3) installés dans une pluralité de cabines d'ascenseur (110-1, 110-2, 110-3) pour diffuser des premiers signaux sans fil identifiables (131-1, 131-2, 131-3), dans lequel les intensités desdits premiers signaux sans fil (131-1, 131-2, 131-3) diminuent sensiblement à mesure que la distance de diffusion augmente ; et
un terminal mobile personnel (200) porté par le passager (90) pour recevoir et identifier le premier signal sans fil (131-1, 131-2, 131-3) diffusé par le premier composant de diffusion de signal sans fil (130-1, 130-2, 130-3) dans au moins l'une de la pluralité de cabines d'ascenseur (110-1, 110-2, 110-3), et déterminer une intensité du premier signal sans fil reçu (131-1, 131-2, 131-3) ;
dans lequel, le terminal mobile personnel (200) est configuré pour déterminer le mouvement du passager (90) par rapport à l'une de la pluralité de cabines d'ascenseur (110-1, 110-2, 110-3) sur la base du changement d'intensité du premier signal sans fil reçu (131-1, 131-2, 131-3), et pour juger en outre, sur la base du résultat de l'identification, si le mouvement est un mouvement pour entrer dans la bonne cabine d'ascenseur (110-1, 110-2, 110-3).

2. Système (10) selon la revendication 1, dans lequel ledit terminal mobile personnel (200) est configuré en outre pour guider, sur la base du résultat du jugement, le passager (90) à entrer dans la bonne cabine d'ascenseur (110-1, 110-2, 110-3) au moyen d'un changement de signal de vibration et/ou de signaux d'invite vocale.

3. Système (10) selon la revendication 2, dans lequel ledit terminal mobile personnel (200) est configuré en outre pour améliorer le signal de vibration et/ou envoyer des signaux d'invite vocale lorsque le mouvement ne correspond pas au mouvement d'entrée dans la bonne cabine d'ascenseur (110-1, 110-2, 110-3).

4. Système (10) selon une quelconque revendication précédente, dans lequel ledit premier signal sans fil (131-1, 131-2, 131-3) comporte des informations d'identification de la cabine d'ascenseur (110-1, 110-2, 110-3) dans lequel le premier composant de diffusion de signal sans fil (130-1, 130-2, 130-3) est installé de manière correspondante ;
ledit terminal mobile personnel (200) est configuré en outre pour identifier les informations d'identification dans le premier signal sans fil et juger sur la base du résultat de l'identification des informations d'identification, si le mouvement est un mouvement correspondant à la bonne cabine d'ascenseur (110-1, 110-2, 110-3).

5. Système (10) selon une quelconque revendication précédente, dans lequel la bonne cabine d'ascenseur (110-1, 110-2, 110-3) est stockée temporairement dans une mémoire dudit terminal mobile personnel (200).

6. Système (10) selon une quelconque revendication précédente, dans lequel le premier composant de diffusion de signal sans fil (130-1, 130-2, 130-3) est un module Bluetooth Low Energy (BLE), et le premier signal sans fil (131-1, 131-2, 131-3) est un signal BLE.

7. Système (10) selon une quelconque revendication précédente, comprenant en outre : un second composant de diffusion de signal sans fil (150-1, 150-2) installé au niveau de la zone de station d'étage d'ascenseur pour envoyer des informations de la bonne cabine d'ascenseur (110-1, 110-2, 110-3) au terminal mobile personnel (200).

8. Système d'ascenseur, qui comprend une pluralité de cabines d'ascenseur (110-1, 110-2, 110-3) et un dispositif de commande d'ascenseur, et comprenant le système (10) pour guider un passager à entrer dans la bonne cabine d'ascenseur selon une quelconque revendication précédente.

9. Système d'ascenseur selon la revendication 8, dans lequel ledit système (10) comprend en outre un second composant de diffusion de signal sans fil (150-1, 150-2) installé au niveau de la zone de station d'étage d'ascenseur, ledit second composant de diffusion de signal sans fil (150-1, 150-2) étant configuré pour diffuser un second signal sans fil (151-1, 151-2), établir automatiquement une connexion de communication sans fil avec le terminal mobile personnel (200) sur la base dudit second signal sans fil (151-1, 151-2), et recevoir une commande de demande d'appel d'ascenseur envoyée automatiquement depuis le terminal mobile personnel (200) lors de l'établissement de ladite connexion de communication sans fil.

10. Système d'ascenseur selon la revendication 9, dans lequel ledit terminal mobile personnel (200) est configuré en outre pour déterminer une distance dudit terminal mobile personnel (200) au second composant de diffusion de signal sans fil (150-1, 150-2) selon l'intensité du second signal sans fil (151-1, 151-2), et pour établir automatiquement la connexion de communication sans fil lorsque la distance est inférieure ou égale à un seuil de distance prédéfini.

11. Système d'ascenseur selon la revendication 9 ou 10, dans lequel ledit second composant de diffusion de signal sans fil (150-1, 150-2) est utilisé pour envoyer la commande de demande d'appel d'ascenseur au dispositif de commande d'ascenseur ; dans lequel ledit dispositif de commande d'ascenseur est utilisé pour désigner une cabine d'ascenseur correspondante (110-1, 110-2, 110-3) pour le passager (90) conformément à ladite commande de demande d'appel d'ascenseur, et ledit système d'ascenseur (10) est utilisé pour envoyer des informations de la cabine d'ascenseur désignée (110-1, 110-2, 110-3) au terminal mobile personnel (200) par l'intermédiaire dudit second composant de diffusion de signal sans fil (150-1, 150-2).

12. Procédé pour guider un passager (90) à entrer dans la bonne cabine d'ascenseur (110-1, 110-2, 110-3), comprenant les étapes :
de réception d'un premier signal sans fil identifiable (131-1, 131-2, 131-3), dans lequel ledit premier signal sans fil (131-1, 131-2, 131-3) est diffusé à partir d'au moins l'une d'une pluralité de cabines d'ascenseur (110-1, 110-2, 110-3), et une intensité dudit premier signal sans fil (131-1, 131-2, 131-3) diminue sensiblement à mesure que la distance de diffusion augmente ;
d'identification du premier signal sans fil reçu (131-1, 131-2, 131-3) pour déterminer à partir de laquelle de la pluralité de cabines d'ascenseur (110-1, 110-2, 110-3) ledit premier signal sans fil (131-1, 131-2, 131-3) est diffusé ;
de détermination, sur la base du changement d'intensité du premier signal sans fil reçu (131-1, 131-2, 131-3), d'un mouvement du passager (90) par rapport à l'une de la pluralité de cabines d'ascenseur (110-1, 110-2, 110-3) ; et
permettant de juger, sur la base du résultat de l'identification, si le mouvement est un mouvement pour entrer dans la bonne cabine d'ascenseur (110-1, 110-2, 110-3).

13. Procédé selon la revendication 12, dans lequel le procédé comporte en outre une étape :
de guidage, sur la base du résultat du jugement, du passager (90) à entrer dans la bonne cabine d'ascenseur (110-1, 110-2, 110-3) au moyen d'un changement de signal de vibration et/ou de signaux d'invite vocale ;
éventuellement, dans lequel à l'étape de guidage du passager (90) pour entrer dans la bonne cabine d'ascenseur (110-1, 110-2, 110-3), lorsque le mouvement correspond au mouvement d'entrée dans la bonne cabine d'ascenseur (110-1, 110-2, 110-3), aucun signal de vibration n'est envoyé ou le signal de vibration est affaibli ; lorsque le mouvement ne correspond pas au mouvement d'entrée dans la bonne cabine d'ascenseur (110-1, 110-2, 110-3), le signal de vibration est renforcé et/ou des signaux d'invite vocale sont envoyés ; et/ou
éventuellement, dans lequel ledit premier signal sans fil (131-1, 131-2, 131-3) comporte des informations d'identification de la cabine d'ascenseur (110-1, 110-2, 110-3) dans laquelle le premier composant de diffusion de signal sans fil (130-1, 130-2, 130-3) est installé ; et
les informations d'identification dans ledit premier signal sans fil (131-1, 131-2, 131-3) sont identifiées dans l'étape d'identification, et/ou
éventuellement, dans lequel à l'étape de jugement, lesdites informations d'identification sont comparées aux informations d'identification de la bonne cabine d'ascenseur (110-1, 110-2, 110-3), si elles sont identiques, il est déterminé que le mouvement est un mouvement vers la bonne cabine d'ascenseur (110-1, 110-2, 110-3) ; et/ou
éventuellement, dans lequel à l'étape de détermination du mouvement, si l'intensité du premier signal sans fil reçu (131-1, 131-2, 131-3) devient progressivement plus forte, il est déterminé que le mouvement du passager (90) s'approche de la cabine d'ascenseur (110-1, 110-2, 110-3) correspondant audit premier signal sans fil (131-1, 131-2, 131-3) ; si l'intensité du premier signal sans fil reçu (131-1, 131-2, 131-3) diminue progressivement, il est déterminé que le mouvement du passager (90) s'éloigne de la cabine d'ascenseur (110-1, 110-2, 110-3) correspondant audit premier signal sans fil (131-1, 131-2, 131-3) ; et/ou
éventuellement, dans lequel ledit premier signal sans fil (131-1, 131-2, 131-3) est un signal BLE.

14. Support de stockage lisible par ordinateur sur lequel est stocké un programme informatique, dans lequel ledit programme est exécuté par un processeur du terminal mobile personnel (200) du système (10) selon la revendication 1, pour exécuter les étapes du procédé selon la revendication 12, et éventuellement une ou plusieurs étapes du procédé selon la revendication 13.
